# EUROPEAN PATENT SPECIFICATION

(11) **EP 0 348 655 B1**
(45) Date of publication and mention of the grant of the patent: **15.02.1995**
(21) Application number: 89108846.0
(22) Date of filing: 17.05.1989
(51) Int. Cl.: B43L 13/02, G01D 15/16

(54) **A marking tool drive system for a draughting or similar type of machine**
Antriebssystem für Schreibgerät in einer Zeichenmaschine oder dergleichen
Système d'entraînement pour instrument de marquage d'une machine à dessiner ou similaire

(30) Priority: 01.07.1988 ES 8802085
(43) Date of publication of application: 03.01.1990
(73) Proprietor: INVESTRONICA S.A., E-28045 Madrid-7 (ES)
(72) Inventor: Andrada Galan, Mario, Madrid (ES); Alcantara Perez, Bernardo, Madrid (ES); Perez Gonzalez, Jose Ramon, Madrid (ES)
(74) Representative: Puschmann, Heinz H.

(56) References cited:
- EP-A- 0 265 957
- FR-A- 1 113 057
- US-A- 3 384 965
- US-A- 3 864 695
- US-A- 4 324 047
- US-A- 4 426 783

## Description

### BACKGROUND OF THE INVENTION

This invention refers to a drive system for working tools like drawing and ruling utilized e.g. in draughting machines, known as plotters and, in particular for a flat plotter type. These tools are of two types: the first is in contact with a strip material with a fluid released during contact, while the second penetrates the strip material, leaving its mark as a result of the penetration. Both types of tools are moved over the strip material, parallel and at right angles to the surface in socalled X- and Y-directions, in response to signals delivered from a controller to the associated transmission devices.

Especially the present invention relates to a working head assembly for a plotting or ruling apparatus and the like, supported by a carriage for positioning the assembly over a strip material in a x-y plane parallel to the surface of that strip material, a support for mounting at least one actuating device to move a tool up and down between a resting position and a working position in a z-direction orthogonal to the x-y plane, said actuating device comprising a housing, a core for supporting the tool in an axially bore, and a solenoid coil, all arranged coaxially to each other, which solenoid coil acts against the force of a first spring, when driving core and tool into their working position, said actuating device further comprising a second spring for coupling said tool to the actuating device.

Such a working head assembly with an actuating device to move up a draughting tool or pen in a resting position and to move down that pen in a working position is shown in United States Patent No. 4,426,783 issued to Gerber et al.

Gerber et al. teach to use a first compression spring for moving up the pen. This first spring acts between the upper end of a pressure foot and a shaft spacer of the pen body. Therefore the force of the spring is permanently transmitted by the presser foot onto the surface of the strip material. Moving the working head assembly in a x-y plane the presser foot will be all times in engagement with the strip material independent of the pen position.

Due to this fact the strip material can be destroied by the load of the presser foot and its sliding on the surface of the strip material. A second problem are difficulties for service especially when changing the strip material.

Another working head assembly for a rotating ruling tool is shown in the EP A 02 65 957 issued to Muramaya et al.
This working head assembly includes an actuating device driven by a socalled "linear motor". The actuator of said linear motor is rigidly connected with the tool at its upper end. Therefore the tool moving in the working position on an uneven surface will jump up against the force of the linear motor.

Sicking teaches in US Patent No. 3,384,965 an actuating device, which is driven by a "pushing down" type of solenoid. That solenoid drives down a first plunger upon a second plunger supported by the force of a scribing pressure adjusting spring. The main function of this spring is to hold both plungers in contact to move back the first plunger into the solenoid, when the tool supporting means are moved up in the resting position driven by the force of a lifting coil.

### SUMMARY OF THE INVENTION

Accordingly, it is a principal object of the invention to provide a novel working head assembly for a draughting or a ruling tool and the like which is allowed to follow any unevennes of the strip material, wereby the strip material is at least in the resting position free from the means supporting or guiding a tool.

It is another object of the invention to provide a compact covered working head assembly with a minimum number of elements which are supported by the carriage in a vibration-free manner.

It is a further object of the invention to provide minimal adjustment requirements for adjust the tool.

The aforementioned main objects are accomplished by the present invention, with a working head assembly which whole actuating device is mounted above the support, which first spring is located under tension between an upper surface of said housing and a cap, which is connected with the core, which cap has a recess to cover the upper end of said tool and which second spring is located in the recess of the cap.

Using a working head assembly according to the invention the strip material at least in the resting position is free from means supporting or guiding a tool. Furthermore penetrating the core and being covered at its upper end by the cap the tool is only at its downside end outside of guiding and supporting means. Therefore and in due to the coaxially arrangement of pen, housing, solenoid coil and springs the working head assembly can be built in a compact manner comprising a minimum number of elements. So such a compact working head assembly is mountable above only the one support supported by the carriage.

According to a first embodiment of the present invention the tool is a draughting tool, the axially bore of the core is a stepped through hole, the second spring is located under tension between the cap and the upper end of the draughting tool for keeping the draughting tool in the resting position against a surface of the stepped through hole of the core, whereby in the resting position the second spring is most relaxed, and the second spring is compressed in the working position for loosening the draughting tool from the surface of the stepped axially bore and to allow the draughting tool to move along its own axis to follow any unevenness of the surface of the strip material without losing contact with said surface. Using a working head assembly according to this embodiment the strip material all times is free from means supporting or guiding a tool. Here an adaption of implement to surface irregularities is done by the spring strength loading the housing mounted by the support and therefore the carriage.

According to a second embodiment of the present invention the tool is a punch, the whole actuating device is mounted above the support, the first spring is located under tension between an upper surface of said housing and a cap, which is connected with the core, the cap has a recess to cover the upper end of said punch, the core has a recess and the second spring rests in the recess of said core for pressing the punch against said cap. In this embodiment an adaption of implement to surface irregularities is done by the spring of the engaged solenoid coil.

For a preferred embodiment of a working head assembly with a ruling tool in the working position the lower end of the core is moved down until a face of the core rests on the strip material, whereby the core can turn on its axis to follow any unevenness of the surface of the strip material especially deformations created by the ruling tool penetrating a sheet material.

The last object of the invention is solved by a cap which is screwed upon the core, whereby the tool is adjustable by turning the cap. So the tool is adjustable against the core resp. the surface of the strip material in such an easy manner.

### BRIEF DESCRIPTION OF THE FIGURES

- FIG. 1: is a perspective view of an automatically controlled draughting plotter,
- FIG. 2: is an elevated general view of the working head comprising a draughting and a ruling tool for a plotter according to Figure 1,
- FIG. 3: is a cross-section elevated view of Figure 2, according to section 3-3, of the draughting tool assembly,
- FIG. 4: is a cross-section of the ruling tool assembly in Figure 2, seen according to section 4-4,
- FIG. 5: is a perspective view of the carriage drive for the plotter in Figure 1,
- FIG. 6: is a view of the draughting tool's position when in operation,
- FIG. 7: is a view of the ruling tool's position when in operation,
- FIG. 8: is a detail of the ruling tool assembly, seen from below and
- FIG. 9A and B: are further details of the ruling tool assembly.

### A DETAILED DESCRIPTION OF THE INVENTION

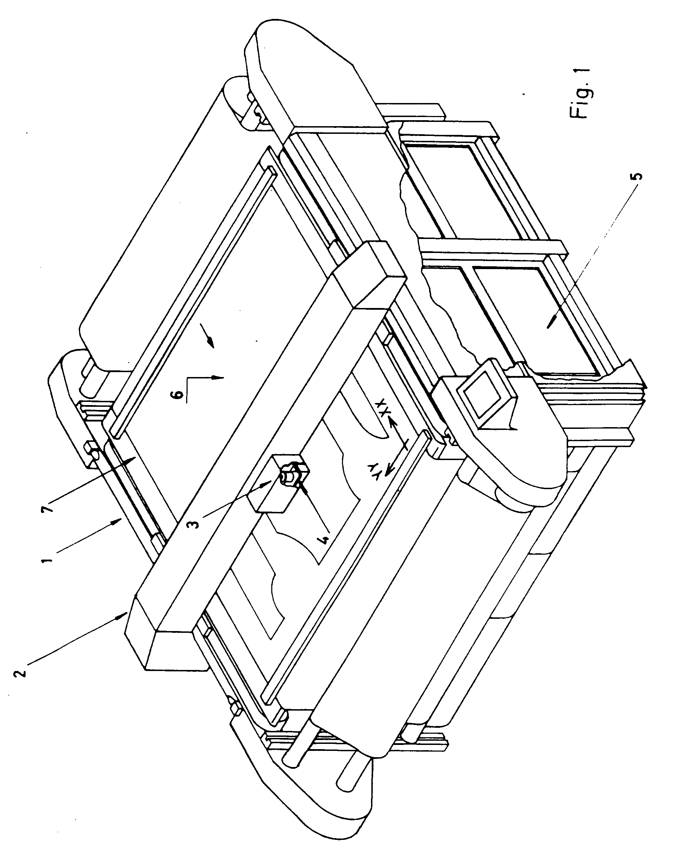

Referring now to the Figures a draughting machine 1 incorporating features of the present invention is illustrated in Figure 1 as an example to facilitate the understanding of this invention.

In particular, this invention refers to the drive system for the working tools used in a draughting machine, and normally referred to as flat plotters, which generates graphic information on a sector of strip material. The head assembly includes a working instrument for drawing and/or ruling 4 which reacts to the commands sent from a controller 5 to generate graphic information on the strip material like drawing paper 6. The controller 5 is the unit which transforms the draughting program into command signals for the motors which move the working head, and for the devices which move the working tools.

This draughting machine has a working area and is automatically operated from said controller 5; the instruments for drawing and/or ruling includes one or more marker instruments or tools which are carried on said carriage 2 which makes up the socalled working head 3. This carriage is the unit which permits the correct positioning of the marking tools over the strip material 6 secured on the stationary working surface 7 of the draughting machine 1.

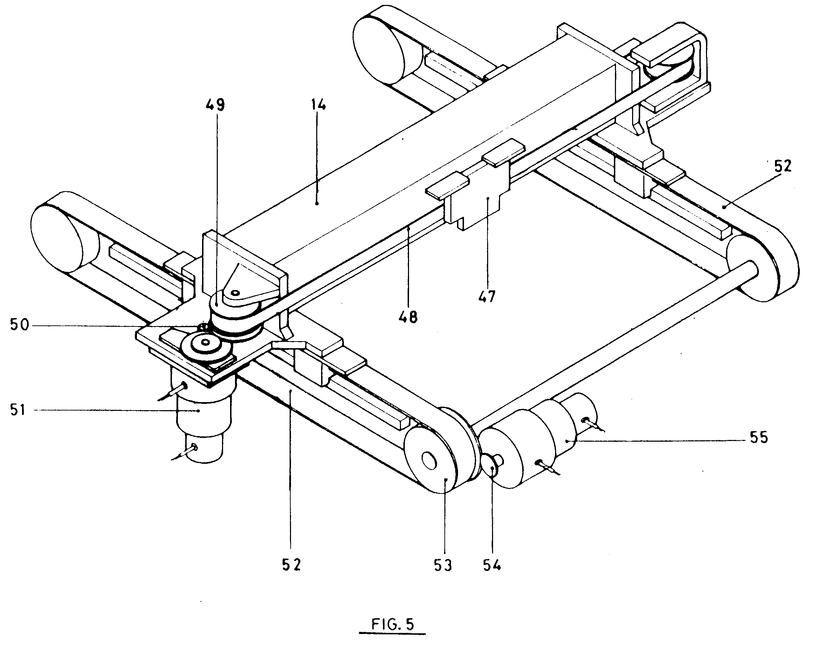

FIG. 5 shows diagrammatically the flat plotter transmission system with servo-motors 55 for the movement of the X-axes and 51 for the Y-axes and the associated gear systems 54 and 50 which transmit the movement through pulleys 53 and 49 as well as the belts 52 and 48 to the X- and Y-axis carriages.

The working head assembly 3 is fitted on the Y-carriage 4 which moves alternately along the direction marked YY; this unit is fitted on X-carriage 2 which moves alternately along the XX direction indicated in Figure 1. This allows the working head to shift to any position on the table with the combined movement of the X- and Y-carriages. The machine has been fitted with a discrete advance system for the strip material, so that it can generate traces which are longer than the table as such.

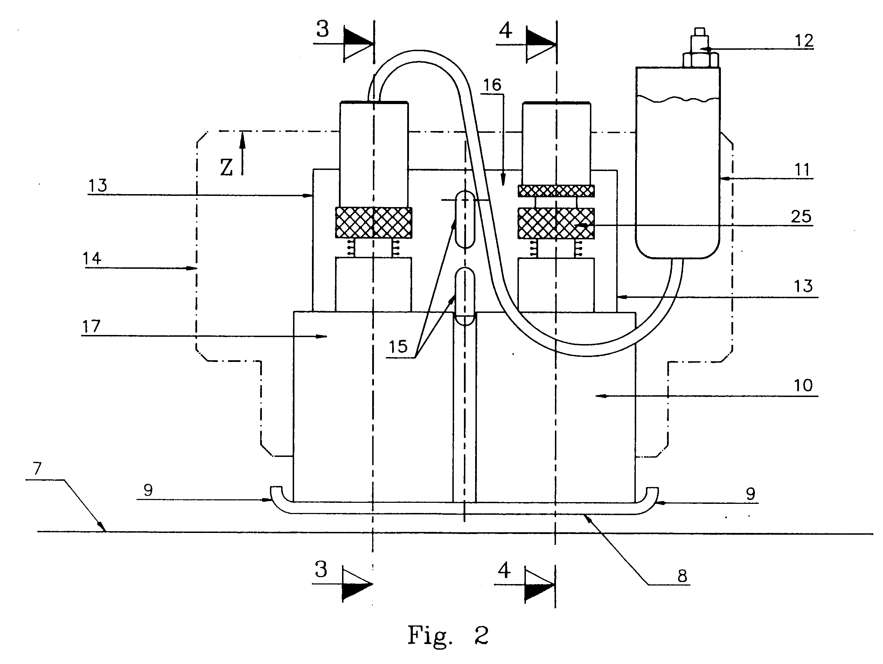

FIG. 2 shows an elevated view of the working head for the flat plotter. This specific working head comprises one or more working tools, namely the drawing tool 17 and the ruling tool 10, which are secured on a support 16 which, in turn, is fixed onto the Y-carriage 14.

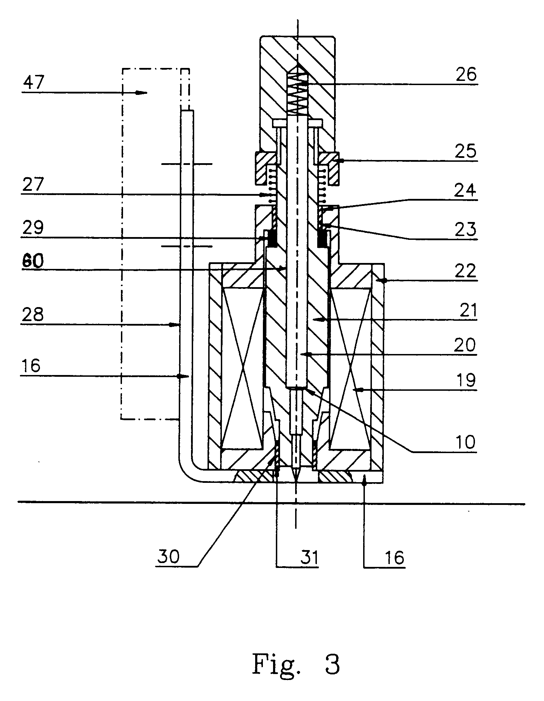

The tools 10 and 17 are parts of a single unit with a support 16 which, in turn, is part of the Y-carriage 14 - in Figure 1 indicated by Numeral 4 - so that when the carriage moves over the working surface, the tools move with it. The support has slots 15 so that it can be adjusted with respect to the working surface towards or away; this adjustment is done on the machine so that, from the highest point of the working surface 7 to the lower face 8 of the tool support, the minimum clearance can be changed to allow the strip material on which the machine is to operate to pass through. The support 16 has two reference surfaces 13 which are complemented by others on the Y-carriage 14 so that when the support is adjusted, it can move only along direction Z, at right angles to the working surface; this is because the axis of the working tools is at right angles to the base 8 of the support 16, which, in turn, is at right angles to the seating face 28 (see Fig. 3) of the support on the Y-carriage 14. The support 16 has a base with rounded zones 9 which make it easier for the working head to enter over the strip material.

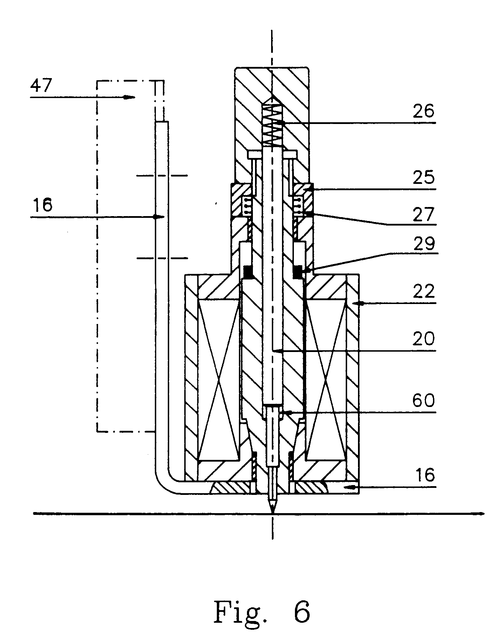

FIG. 3 shows an elevation view of the drawing tool 17 seen through cross-section 3-3 of Figure 2. Here, the elements can be seen which make up said drawing tool. The tool consists of an electromagnet housing 22 secured at the bottom to the support 16; there are two openings 30 and 24 through said housing in which friction bushings 31 and 23 are arranged through which the electromagnet core 21 can slide, constituting the main body of the draughting tool having a stepped through hole 60. There is a coil 19 inside the solenoid housing 22 which is designed to move the magnetic core 21 of the solenoid downwards against the force of a spring 27 until a coaxially arranged plastic stroke limiter 25 comes up against the housing 22 of the solenoid, as shown in Figure 6. Thus the draughting tool is raised when the coil 19 is not charged. All of the above described components are arranged coaxially to the core 21.

The presence of the plastic limiter 25 has the advantage of preventing the sharp knock against the housing 22 so that the unit operates more silently. When the core 21 of the solenoid moves to its bottom position it takes a ball-point 20 - by through hole 60 coaxially arranged - with it, because a spring 26 keeps it compressed against the surface 10 of the stepped through hole 60 of the solenoid core 21.

Fig. 6 shows a side view of the draughting tool 20 in its working position, i.e. in operation. It shows how the limiter 25 is in contact with the housing of the electromagnet 22, and the ball-point 20 can move along its own axis without losing contact with the surface of the strip material, adapting to any possible unevenness in it, thanks to the effect of the spring 26 acting against the ball-point as seen in Fig. 3 also.

In some cases, the ball-point may have an additional ink container 11 as shown in Figure 2; this tank is under air pressure since, once the ink has been added, it is pressurized by means of the one-way valve 12.

The ball-point 20 rises when the coil 19 (Figure 3) ceases to operate; the compressed spring 27 pushes the limiter 25 then upwards, taking the core, and therefore the ball-point, with it, until a coaxial plastic stroke limiter 29 on the core comes into contact with the housing of the electromagnet 22.

This type of drive has obvious advantages; on the one hand, there is the fact that the system is highly compact, since all the elements are coaxial with the line of the working instrument itself. Similarly, this means that, when drive stresses are applied, symmetry is exact. A further significant advantage is in the economics of the design: it is cheaper than the traditional indirect drive systems, and this benefit is clearly to do with the small number of components involved.

Furthermore, there is the additional advantage that the system requires virtually no adjustments in its operation, the only thing required being the overhead positioning of the carriage (the working head); this is done only when the carriage must be replaced, and that is an infrequent occurrence.

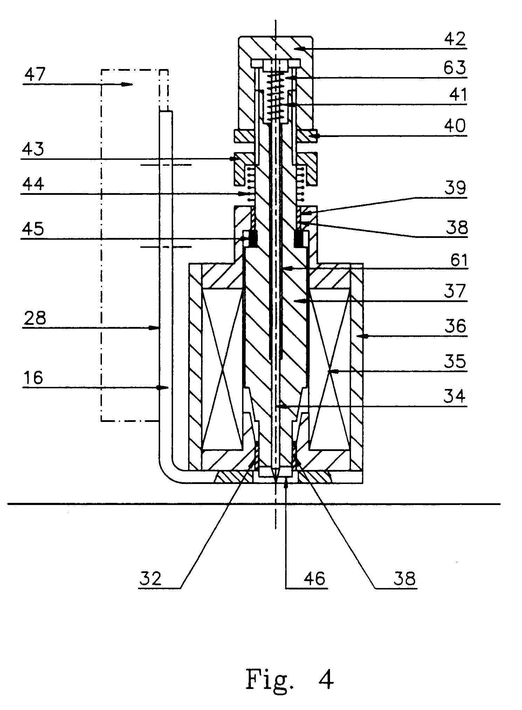

FIG. 4 shows an elevated view of the ruling tool 34, seen along section 4-4 of Figure 2. In Figure 4, the elements making up this tool can be seen. The tool consists of an electromagnet housing 36 secured at the bottom to support 16; as in the previous described case, this housing has two openings 32 and 39 which house friction bushings 33 and 38 each, inside which the electromagnet core 37 which has a stepped through hole 61 making up the main body of the ruling tool 34 can slide. Inside said housing 36, there is also a coil 35 which is designed to move the electromagnet core 37 downwards until the face 46 of said electromagnet core 37 rests on the strip material 6 which is to be ruled. This means that, when the coil is activated, the ruling tool or punch 34 which rules the line is introduced into the strip material by the same amount as said punch 34 emerges from the face 46 of the electromagnet core 37. The penetration of the punch into the strip material can be adjusted by turning a threaded cap 42 which is in permanent contact with the punch under the influence of a spring 41 which rests in a recess 63 of the electromagnet core 37 and presses the punch against the said cup 42. All components described above are arranged coaxially to the core 37.

Once this adjustment is made as required for the protrusion of the punch from the electromagnet core 37, this position is fixed by tightening a nut 40 against said cap 42. The ruling tool is raised when the coil 35 is not charged, because of the effect of the spring 44 which presses the limiter 43 upwards, taking the whole tool with it. The upward movement is limited by the plastic stroke limiter 45 when it comes into contact with the electromagnetic housing 36.

The limiter 43 is adjusted so that surface 46 always comes into contact against the strip material before said limiter 43 touches the electromegnet housing 36. Discharges 57 can be seen on the bottom surface 46 of the ruling tool for the removal of any possible shavings, at the same time as permitting correct and even support on the strip material, so ensuring that deformations which may be caused to said material in the area of the marking line do not remove the point of the punch from the material.

The advantages listed in the explanation of the embodiment according to Figure 3, referring to the drawing tool, are also existent for the ruling tool, and for the same reasons - compactness, low cost, symmetry and uniformity in the application of forces, the low number of parts, and the minimal adjustments.

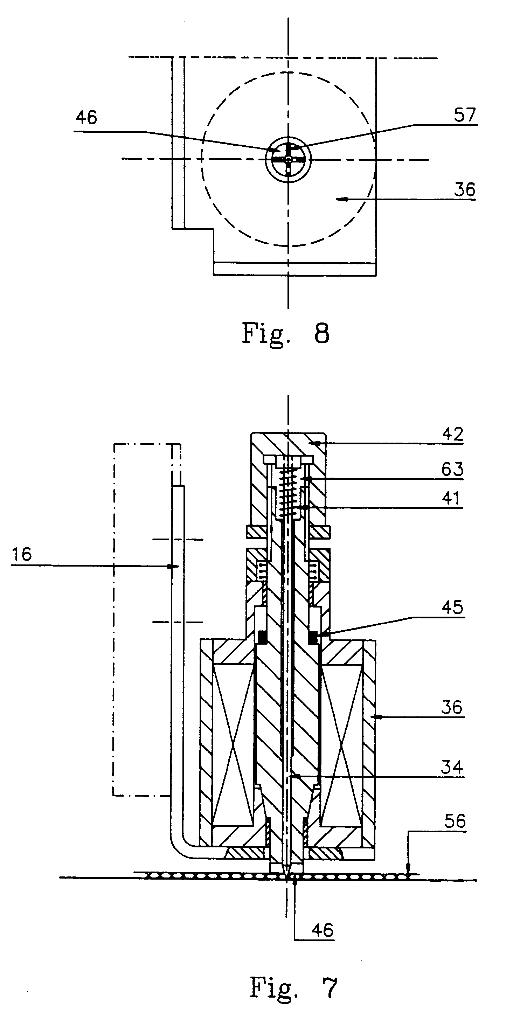

FIG. 7 shows the ruling tool in its operating position, with the detail of how the surface 46 referred to above is supported on the strip material 56 (in Figure 1 strip material 6) while the part of the punch 34 protruding from the surface 46, is inside the strip material which is to be ruled.

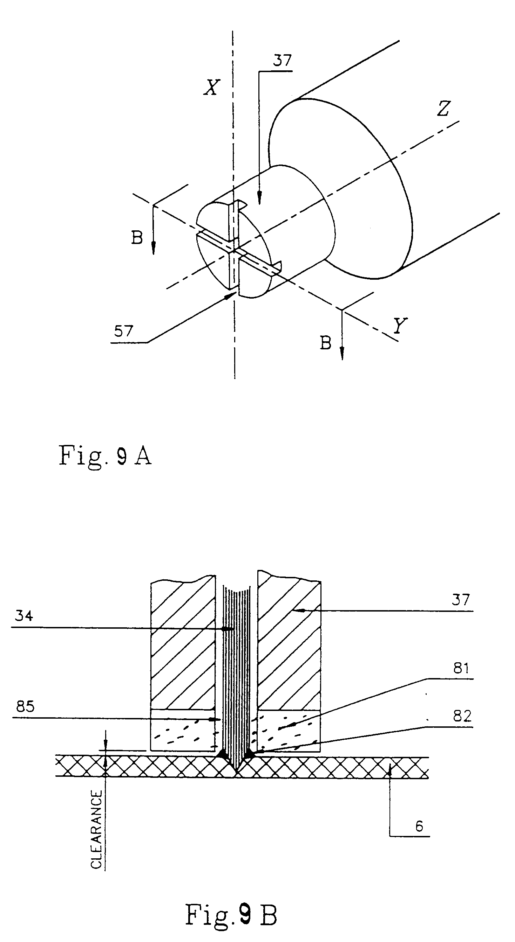

FIG. 8 in connection with Figures 9A and 9B show the shape of said discharges 57 on the surface 46 of the ruling tool core. As was explained in connection with Figure 4 these discharges make it possible to remove any shavings at the same time as guiding the ruling tool with respect to the marking line, so that the axis of each of the discharges is aligned with said marking line.

As shown especially in FIG. 9B during the ruling operation the ruling tool generates shavings or chips 81 and the discharges 57 allow these shavings or chips to be removed from the operating area. Without such discharges the shavings cannot be removed and rest between the ruling tool 34 and the surface of sheet material until cavity 85 between ruling tool 34 and core 37 is filled up. Then new shavings push up the core 37, this produces a clearance between the ruling tool 34 and the surface of sheet material, this behaviour changes the depth of mark.

Also, during the ruling operation when the tool 34 penetrates into the sheet material, the tool creates deformations 82 in the area of the marking line. These deformations increase the thickness of the material and change the distance between tool and material surface, but the core 37 can turn on its axis when the deformations contact the walls of discharges 57 and this allows an alignement of discharges and marking line. In this way, the ruling tool rests correctly onto the sheet material, like drawing paper 6.

## Claims

1. Working head assembly (3) for a plotting or ruling apparatus (1) and the like, supported by a carriage (2) for positioning the assembly over a strip material (6) in a x-y plane parallel to the surface of that strip material (6), a support (16) for mounting at least one actuating device to move a tool (20; 34) up and down between a resting position and a working position in a z-direction orthogonal to the x-y plane, said actuating device comprising a housing (22; 36), a core (21; 37) for supporting the tool (20; 34) in an axially bore (60; 61), and a solenoid coil (19; 35), all arranged coaxially to each other, which solenoid coil (19; 35) acts against the force of a first spring (27; 44) when driving core (21; 37) and tool (20; 34) into their working position, said actuating device further comprising a second spring (26; 41) for coupling said tool (20; 34) to the actuating device, **characterized in that** said whole actuating device is mounted on a horizontal part of said support (16), that the first spring (27; 44) is located under tension between an upper surface of said housing (22; 36) and a cap (42), which is connected with the core (21; 37), that the cap (42) has a recess to cover the upper end of said tool (20; 34) and that the second spring (26; 41) is located in the recess of the cap (42).

2. Working head assembly (3) according to claim 1, **characterized in that** the tool is a draughting tool (20), that the axially bore of the core (21) is a stepped through hole (60), that the second spring (26) is located under tension between the cap (42) and the upper end of the draughting tool (20) for keeping the draughting tool (20) in the resting position against a surface (10) of the stepped through hole (60) of the core (21), whereby in the resting position the second spring (26) is most relaxed, and in that the second spring (26) is compressed in the working position for loosening the draughting tool (20) from the surface (10) of the stepped axially bore (60) and to allow the draughting tool (20) to move along its own axis to follow any unevenness of the surface of the strip material (6) without losing contact with said surface.

3. Working head assembly (3) according to claim 1, **characterized in that** the tool is a punch (34), that said whole actuating device is mounted above a horizontal part of support (16), that the first spring (44) is located under tension between an upper surface of said housing (36) and a cap (42), which is connected with the core (37), that the cap (42) has a recess to cover the upper end of said punch (34), that the core (37) has a recess (63) and that the second spring (41) rests in the recess (63) of said core (37) for pressing the punch (34) against said cap (42).

4. Working head assembly according to claim 3, **characterized in that** in the working position the lower end of the core (37) is moved down until a face (46) of the core (37) rests on the strip material (6), whereby the core (37) can turn on its axis to follow any unevenness of the surface of the strip material (6).

5. Working head assembly in accordance with one ore more of claims 1 to 4, **characterized in that** the cap (42) is screwed upon the core (21; 37), whereby the tool (20; 34) is adjustable by turning the cap (42).

## Patentansprüche

1. Werkzeugkopf (3) für einen Plotter, ein Reiß- oder ein ähnliches Gerät (1) mit einem Schlitten (2) zum Verfahren des Werkzeugkopfes oberhalb eines bahnenförmigen Materials (6) in einer X-Y Ebene parallel zur Oberfläche des Materials (6), mit einem Träger (16) zur Befestigung von mindestens einer Antriebsvorrichtung zum Auf- und Abbewegen eines Werkzeuges (20,34) zwischen einer Ruhestellung und einer Arbeitsstellung in Z-Richtung senkrecht zur X-Y-Ebene, die ein Gehäuse (22,36), einen Kern (21,37) zur Halterung des Werkzeuges (20,34) in einer axialen Bohrung (60,61) und einen Tauchmagnet (19,35) umfaßt, die jeweils koaxial zueinander angeordnet sind, wobei die Magnetspule (19,35) die Bewegung des Kerns (21, 37) und des Werkzeuges (20,34) in die Arbeitsstellung entgegen der Kraft einer ersten Feder (27,44) bewirkt und die Antriebsvorrichtung eine zweite Feder (26 ,41) zur Kupplung von Werkzeug (20,34) und Antriebsvorrichtung aufweist, **dadurch gekennzeichnet**, daß die gesamte Antriebsvorrichtung an einem horizontalen Teil des Trägers (16) angeordnet ist, daß die erste Feder (27,44) unter Vorspannung zwischen einer oberen Fläche des Gehäuses (22,36) und einer mit dem Kern (21,37) verbundenen Kappe (42) angeordnet ist, daß die Kappe (42) eine das obere Ende des Werkzeuges (20,34) umschließende Ausnehmung aufweist und daß die zweite Feder (26,41) in der Ausnehmung der Kappe (42) angeordnet ist.

2. Werkzeugkopf (3) nach Anspruch 1, **dadurch gekennzeichnet**, daß das Werkzeug ein Zeichenwerkzeug (20) ist, daß die axiale Bohrung des Kerns 21 eine durchgehende Bohrung (60) mit einer Stufe ist, daß die zweite Feder (26) unter Vorspannung zwischen der Kappe (42) und dem oberen Ende des Zeichenwerkzeuges (20) eingespannt ist und das Zeichenwerkzeug (20) in seiner Ruhestellung gegen die Fläche (10) der Stufe in der Bohrung (60) des Kerns (21) hält, derart, daß die zweite Feder (26) in der Ruhestellung entspannt und in der Arbeitsstellung zusammengedrückt ist und somit das Zeichenwerkzeug (20) von der Stufe (10) in der axialen Bohrung (60) abhebt und eine Bewegung des Zeichenwerkzeuges (20) längs seiner eigenen Achse beim Nachfahren einer Unebenheit in der Oberfläche des bahnenförmigen Materials (6) zuläßt, ohne daß sich das Werkzeug von der Materialoberfläche abhebt.

3. Werkzeugkopf (3) nach Anspruch 1, **dadurch gekennzeichnet**, daß das Werkzeug ein Stanzwerkzeug (34) ist, daß die gesamte Antriebsvorrichtung oberhalb eines horizontalen Teils eines Trägers (16) angeordnet ist, daß die erste Feder (44) vorgespannt zwischen einer oberen Fläche des Gehäuses (36) und einer Kappe (42) angeordnet ist, die mit dem Kern 37) verbunden ist, daß die Kappe (42) eine das obere Ende des Stanzwerkzeuges (34) umschließende Ausnehmung aufweist, daß der Kern (37) eine ein Widerlager für die zweite Feder (41) bildende Eindrehung (63) aufweist, derart, daß die zweite Feder (41) das Stanzwerkzeug (34) gegen die Kappe (42) drückt.

4. Werkzeugkopf nach Anspruch 3, **dadurch gekennzeichnet**, daß das untere Ende des Kerns (37) in der Arbeitsstellung nach unten bewegbar ist bis seine Fläche (46) auf dem bahnenförmigen Material (6) aufliegt, derart, daß sich der Kern (37) um seine Achse drehen und einer Unebenheit auf der Fläche des bahnenförmigen Materials (6) folgen kann.

5. Werkzeugkopf nach einem oder mehreren der Ansprüche 1 bis 4, **dadurch gekennzeichnet**, daß die Kappe (42) auf den Kern (21,37) aufgeschraubt ist, so daß das Werkzeug (20,34) durch Verdrehen der Kappe (42) einstellbar ist.

## Revendications

1. Assemblage de tête de travail (3) pour un appareil (1) traçant ou traceur de lignes ou similaire, portée par un charriot (2) pour positionner l'assemblage au-dessus d'une bande de matière (6) dans un plan (X-Y) parallèle à la surface de la bande de matière (6), un support (16) pour monter au moins un dispositif de commande pour déplacer un outil (20; 34) vers le haut et vers le bas entre une position de repos et une position de travail dans une direction z orthogonale au plan x-y, ledit dispositif de commande compenant un boîtier (22; 36), un noyau (21; 37) pour supporter ledit outil (20; 34) dans dans un alésage axial (60; 61), et une bobine de solénoïde (19; 35), tous arrangés coaxialement l'un à l'autre, ladite bobine de solénoïde (19; 35) agissant contre la force d'un premier ressort (27; 44), quand elle déplace le noyau (21; 37) et l'outil (20; 34) dans leur position de travail, le dispositif de commande comprenant en outre un second ressort (26; 41) pour coupler ledit outil (20; 34) au dispositif de commande, caractérisé en ce que le dispositif de commande est monté sur une partie horizontale dudit support (16), le premier ressort (27; 44) est placé sous tension entre une surface supérieure du boîtier (22; 36) et un chapeau (42) qui est relié audit noyau (21; 37), le chapeau (42) a un creux pour couvrir l'extrémité supérieure dudit outil (20; 34) et le second ressort (26; 41) est logé dans le creux du chapeau (42).

2. Assemblage de tête de travail (3) selon la revendication 1, caractérisé en ce que l'outil est un outil à dessiner (20), l'alésage axial du noyau (21) est un trou de passage (60) étagé, le second ressort (26) est logé sous tension entre le chapeau (42) et l'extrémité supérieure de l'outil à dessiner (20) pour garder l'outil à dessiner (20) dans sa position de repos contre une surface (10) du trou de passage (60) étagé du noyau (21), de sorte que dans la position de repos le second ressort (26) est le plus détendu, et le second ressort (26) est comprimé dans la position de travail pour libérer l'outil à dessiner (20) de la surface (10) du trou de passage (60) étagé et de permettre à l'outil à dessiner (20) de se déplacer le long de son propre axe pour suivre toute irrégularité de la surface de la bande de matière (6) sans perdre le contact avec ladite surface.

3. Assemblage de tête de travail (3) selon la revendication 1, caractérisé en ce que l'outil est un poinçon, le dispositif de commande entier est monté au-dessus d'une partie horizontale du support (16), le premier ressort (44) est logé sous tension entre une surface supérieure dudit boitier (36) et un chapeau (42) qui est connecté au noyau (37), le chapeau (42) a un creux pour couvrir l'extrémité supérieure dudit poinçon (34), le noyau (37) a un creux (63) et le second ressort (41) repose dans le creux (63) dudit corps (37) pour presser le poiçon (34) contre le chapeau (42).

4. Assemblage de tête de travail selon la revendication 3, caractérisé en ce que dans la position de travail l'extrémité inférieure du noyau (37) est déplacée vers le bas jusqu'à ce qu'une surface (46) du noyau (37) repose sur la bande de matière (6), permettant ainsi au noyau (37) de tourner sur son axe pour suivre toute irrégularité de la surface de la bande de matière (6).

5. Assemblage de tête de travail selon une ou plusieurs des revendications 1 à 4, caractérisé en ce que le chapeau (42) est vissé sur le noyau (21; 37), ce qui rend l'outil (20; 34) ajustable en tournant le chapeau (42).
